Europäisches Patentamt

European Patent Office

Office européen des brevets

(11) Veröffentlichungsnummer: **0 477 480 A2**

## (12) EUROPÄISCHE PATENTANMELDUNG

(21) Anmeldenummer: **91110617.7**

(51) Int. Cl.5: **B23B 29/02**

(22) Anmeldetag: **26.06.91**

(30) Priorität: **30.07.90 DE 4024096**

(43) Veröffentlichungstag der Anmeldung:
**01.04.92 Patentblatt 92/14**

(84) Benannte Vertragsstaaten:
**AT BE CH DE DK ES FR GB GR IT LI LU NL SE**

(71) Anmelder: **HOCHMUTH + HOLLFELDER GdbR BESITZGESELLSCHAFT**
**Wertachstrasse 27**
**W-8500 Nürnberg(DE)**

(72) Erfinder: **Die Erfindernennung liegt noch nicht vor**

(74) Vertreter: **Patentanwälte Czowalla . Matschkur + Partner**
**Dr.-Kurt-Schumacher-Strasse 23 Postfach 9109**
**W-8500 Nürnberg 11(DE)**

(54) **Schneidwerkzeug, insbesondere Bohrstange.**

(57) Schneidwerkzeug für die spanabhebende Metallbearbeitung mit einem in einer Ausnehmung eines in Längsrichtung gabelartig geschlitzten Halterschafts durch den aufliegenden Klemm-Schenkel verspannten Schneideinsatz, insbesondere Mini-Bohrstange, wobei die Spannfläche des Schneideinsatzes parallel zur Achse des Halterschaftes liegt und daß alle drei Schneideinsatz-Auflageflächen der zweiseitig offenen Ausnehmung sowohl untereinander, als auch mit der offenen Seitenfläche bzw. Stirnfläche Winkel kleiner 90 ° einschließen.

FIG. 1

EP 0 477 480 A2

Die Erfindung bezieht sich auf ein Schneidwerkzeug für die spanabhebende Metallbearbeitung mit einem in einer Ausnehmung eines in Längsrichtung gabelartig geschlitzten Halterschaftes durch den aufliegenden Klemm-Schenkel verspannten Schneideinsatz, insbesondere eine Mini-Bohrstange.

Üblicherweise werden bei Schneidwerkzeugen die häufig Wechsei- bzw. Wendeschneidplatten darstellenden Schneideinsätze mittels einer Spannpratze und einer Spannschraube in der Ausnehmung des Werkzeugschafts gehaltert. Diese Art der Halterung bei größerbauenden Werkzeugen versagt jedoch bei der Haltung extrem kleiner Werkzeuge, wie beispielsweise Mini-Bohrstangen mit Bearbeitungsdurchmessern von 3 mm und weniger.

Zwar sind zur Halterung von kleinen Schneideinsätzen für Außeneinstichwerkzeuge bereits Schneidwerkzeuge mit geschlitztem Halterschaft und einem dadurch gebildeten Klemmschenkel vorgeschlagen worden, der ohne die Notwendigkeit einer gesonderten Spannschraube eine federnde selbsthemmende Spannung in zwei Belastungsrichtungen auf den Schneideinsatz ausübt. Bei der Innenbearbeitung, wie sie bei Bohrstangen stattfindet, speziell bei einem gewollten Planzug treten aber Schnittkräfte auf, welche im Gegensatz zu den bekannten Einstechsystemen gegen die federnde Spannung wirken, so daß eine Klemmhaltung des Schneideinsatzes nach Art dieser Einstichwerkzeuge für Bohrstangen nicht geeignet ist.

Der Erfindung liegt deren Aufgabe zugrunde, eine Schneidwerkzeug der eingangs genannten Art zu gestalten, daß es auch für die Innenbearbeitung und speziell für Schneidwerkzeuge mit extrem kleinen Abmessungen einsetzbar ist.

Zur Lösung dieser Aufgabe ist erfindungsgemäß vorgesehen, daß die Spannfläche des Einsatzes parallel zur Achse des Halterschaftes liegt und daß alle drei Schneideinsatz-Auflageflächen der zweiseitig offenen Ausnehmung sowohl untereinander, als auch mit der offenen Seitenfläche und der Stirnfläche Winkel kleiner 90° einschließen.

Durch diese Ausbildung der Körperfunktionsflächen mit Winkeln unter 90° ist ein Heraushebeln der Schneidplatte in allen Belastungsrichtungen unmöglich. Darüber hinaus ist in allen Belastungsrichtungen zwischen der Schneidplatte und den Plattensitz eine Selbsthemmung vorhanden.

Durch die Anordnung dieser Funktionswinkel entsteht zwangsläufig am hintersten Punkt der Schneidplatte die größte Schneidplattendicke. Nachdem dieser Punkt zugleich in unmittelbarer Nähe des Bohrstangenschaftdurchmessers zu liegen kommt, ist dies für die Stabilität des Werkzeuges kein Nachteil. Der Schneidplattenunterbau wird also nicht ungebührlich geschwächt.

Zum Wechseln der Schneidplatte ist in Weiterbildung der Erfindung vorgesehen, daß der Klemmschenkel eine vom inneren Ende des Längsschlitzes beabstandete Gewindebohrung zum Einschrauben eines sich auf dem darunterliegenden Schaft abstützenden Aufspreizdorns aufweist, der bevorzugt mit einer Überspannungen verhinderten Anschlagschulter versehen sein kann.

Der Klemmschenkel soll damit nicht durch Einführen eines Werkzeugs in den Schlitz aufgehebelt werden, was bei den speziell angestrebten Bohrstangen mit nur wenigen Millimetern Bearbeitungsdurchmesser in der Praxis ja auch kaum vernünftig denkbar wäre. Stattdessen schraubt man einen Aufspreizdorn in die den Schenkel durchsetzende Bohrung ein, bezieht sie sich auf der Unterseite des Schlitzes auf dem Halterschaft abstützt. Beim weiteren Einschrauben wird zwangsläufig der Klemmschenkel nach oben gebogen, so daß ein Schneideinsatz frei wird und heraus genommen bzw. ein neuer Schneideinsatz in die Ausnehmung des Halterschafts eingelegt werden kann.

Speziell bei den sehr kleinen Schneideinsätzes für Bearbeitungsdurchmesser von 3 mm, bei denen der Schneideinsatz selbst ja nur 1 bis 2 mm Abmessungen aufweist, ist das Herausnehmen und insbesondere das passgenaue Einsetzen in die Ausnehmung des Halterschafts außerordentlich schwierig. Um den Schneideinsatzwechsel gerade bei solchen Miniwerkzeugen zu erleichtern, ist erfindungsgemäß eine Vorrichtung vorgesehen, die gekennzeichnet ist durch eine Schneideinsatz-Auflagemulde mit Justierhalterungen für den Halterschaft mit seitlichen Schneideinsatz-Auflagestufen am vorderen Ende, deren beide Seitenflächen im wesentlichen in einer Ebene mit der Bodenfläche bzw. der Rückdruckabstützfläche der Schneideinsatz-Ausnehmung des aufgelegten Schneidwerkzeugs liegen.

Nachdem also zunächst der Halterschaft auf die Mulde aufgedreht und mit Hilfe einer Befestigungsvorrichtung drehfest und verschiebesicher gehaltert ist, kann mit Hilfe des Aufspreizdorns der Klemmschenkel in die Öffnungsstellung nach oben gebogen werden. Anschließend wird der Schneideinsatz auf die der offenen Seite der Ausnehmung des Halterschafts zugekehrte Auflagestufe aufgelegt und auf dieser in die Ausnehmung eingeschoben, was ja wegen der fluchtenden Ausbildung der Seitenflächen der Stufe mit den entsprechenden Flächen der Ausnehmung sehr leicht möglich ist. Durch Herausdrehen des Aufspreizdorns erfolgt dann problemlos die passgenau justierte Verklemmung des Schneideinsatzes.

Weitere Vorteile, Merkmale und Einzelheiten der Erfindung ergeben sich aus der nachfolgenden Beschreibung eines Ausführungsbeispiels wie anhand er Zeichnung. Dabei zeigen:

Fig. 1 eine teilweise geschnittene Seitenansicht einer erfindungsgemäß ausgebildeten Minibohrstange mit eingeschraubten Aufspreizdorn,

Fig. 2 eine Draufsicht auf die Bohrstange nach Fig. 1,

Fig. 3 eine Stirnansicht der Bohrstange nach Fig. 1,

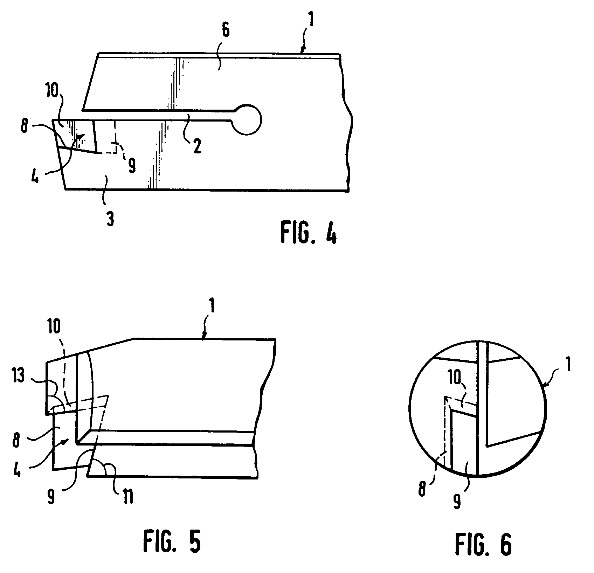

Fig. 4-6 verschiedene Ansichten des vorderen Endes des Halterschafts ohne Schneideinsatz,

Fig. 7 einen Längsschnitt durch eine Vorrichtung zum Wechseln des Schneideinsatzes bei einer erfindungsgemäßen Bohrstange,

Fig. 8 eine Draufsicht auf die Vorrichtung nach Fig. 7 und

Fig. 9 eine vergrößerte perspektivische Ansicht der Schneidvorrichtung mit dem vorderen Bohrstangenende schräg von vorne.

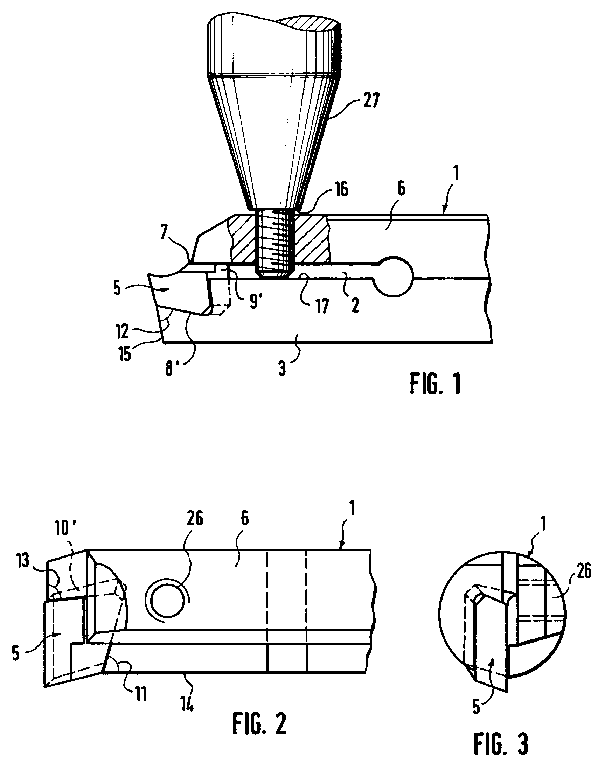

Die Fig. 1 bis 3 zeigen das vordere Ende einer Minibohrstange 1, wobei der Durchmesser des mit einem Längsschlitz 2 versehenen vorderen Endes des Halterschafts 3 in der Praxis etwa 3 mm oder gar etwas weniger betragen kann. Durch den Längsschlitz 2 ist oberhalb des etwas kräftigeren Halterschafts 3 mit einer Ausnehmung 4 für einen Schneideinsatz 5 ein Klemm-Schenkel 6 gebildet der auf der zur Längsachse der Bohrstange parallelen Spannfläche 7 des Einsatzes 5 aufliegt und diesen in der Ausnehmung 4 derart haltert, daß der sicher und unter Selbsthemmung an den drei Auflageflächen der Ausnehmung 4 anliegt. Es handelt sich dabei um die Bodenfläche 8 der Ausnehmung, die Hauptschnittdruckabstützfläche 9 und die Rückdruckabstützfläche 10. Diese drei Flächen 8 bis 10 schließen genauso wie die an ihnen anliegenden Flächen 8', 9' und 10' des Schneideinsatzes 5 jeweils spitze Winkel untereinander ein, wobei noch hinzu kommt, daß jede dieser Auflageflächen 8 bis 10 auch noch einen spitzen Winkel 11, 12 bzw. 13 zur jeweils anschließenden offenen Seitenflächen 14 bzw. der Stirnfläche 15 bildet. Durch diese Bemessung der Winkel ist ein Heraushebeln der Schneidplatte 5 in allen Belastungsrichtungen verhindert und in allen Belastungsrichtungen ist darüberhinaus zwischen der Schneidplatte 5 dem Plattensitz in der Ausnehmung 4 eine Selbsthemmung vorhanden.

Der obere Klemm-Schenkel 6 wird von einer Gewindebohrung 26 durchsetzt, die der Aufnahme eines Aufspreizdorns 27 dient der mit einer Anschlagschulter 16 versehen ist. Beim Einschrauben in die Gewindebohrung 26 stützt sich das Ende des Aufspreizdorns 27 auf der Oberseite 17 des Halterschafts ab. Dreht man den Aufspreizdorn weiter, so erfolgt zwangsweise ein Anheben des Klemm-Schenkels 6, so daß der Schneideinsatz 5 frei wird und ausgewechselt werden kann. Ist kein Schneideinsatz in der Ausnehmung, so kann auf diese Art und Weise die Ausnehmung soweit geöffnet werden, daß sich ein Schneideinsatz einschieben läßt, der nach dem Herausdrehen des Aufspreizdorns 27 durch den Klemm-Schenkel 6 gehaltert wird. Um bei dieser Art der Öffnung des Klemm-Schenkels 6 eine Überdehnung zu vermeiden ist die Anschlagschulter 16 vorgesehen, die nur eine begrenzte Verbiegung des Klemm-Schenkels zuläßt, sodaß dauerhafte Verformungen nicht auftreten können. Bei Berücksichtigung der Tatsache, daß der Halterschaft 3 der Bohrstange 1 nach Fig. 1 bis 3 nur etwa einen Durchmesser von etwa 3 mm aufweisen soll, erkennt man, daß sowohl die üblichen Pratzenspannungen mit Klemmschrauben zur Halterung des Schneideinsatzes nicht in Betracht kommen, als auch nicht die üblichen Lösewerkzeuge nach Art von Schraubendrehern, die in den Spalt 2 eingreifen um den Klemm-Schenkel 6 auszuhebeln.

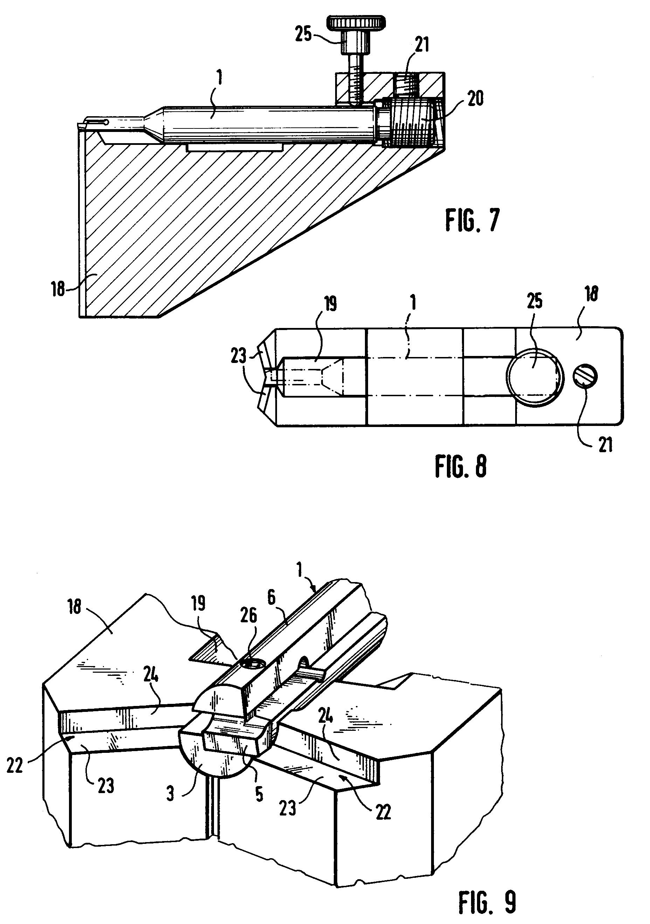

Zur Erleichterung des Schneideinsatzwechsels ist eine in den Fig. 7 bis 9 dargestellte Vorrichtung vorgesehen, die aus einem Metallblock 18 mit einer oberseitigen Mulde 19 zum Einlegen der Bohrstange 1 besteht. Eine Justierschraube 20, die durch einen weitere Feststellschraube 21 arretiert werden kann, bildet eine einstellbaren Anschlag derart, daß das vordere Ende der Bohrstange genau justiert zum vorderen Ende des Blocks 18 zu liegen kommt wo seitliche Auflagestufen 22 angeordnet sind, deren Seitenflächen 23 bzw. 24 genau fluchtend zu den Auflageflächen 8 bzw. 9 der Schneideinsatz-Ausnehmung 4 liegen sollen. Eine Feststellschraube 25 mit Rändelkopf ermöglicht die Halterung der Bohrstange in der Mulde 19 derart, daß sie sich wieder in Längsrichtung verschieben noch verdrehen kann.

Durch die Ausbildung der erfindungsgemäßen Vorrichtung ergibt sich die einfache Möglichkeit einen Schneideinsatz, der selbst nur Abmessungen von einigen wenigen Millimetern aufweist, zunächst auf eine der Stufen 23 aufzulegen, je nachdem, nach welcher Seite die Bohrstange geöffnet ist, um dann bei mit Hilfe des Aufspreizdorns 15 geöffnetem Klemm-Schenkel 6 den Schneideinsatz einfach justiert in die Ausnehmung 4 einschieben und durch Herunterlassen des Klemm-Schenkels 6 befestigen zu können. Von Hand wäre ein solches Einsetzes eines winzigen Schneideinsatz derart, daß er auch genau an den 3 Auflageflächen anliegt, während der Klemm-Schenkel von oben heruntergelassen wird, sehr schwierig oder überhaupt nicht möglich.

**Patentansprüche**

1. Schneidwerkzeug für die spanabhebende Metallbearbeitung mit einem in einer Ausnehmung eines in Längsrichtung gabelartig geschlitzten Halterschafts durch den aufliegenden Klemm-Schenkel verspannten Schneideinsatz, insbesondere Mini-Bohrstange, dadurch gekennzeichnet, daß die Spannfläche (7) des Schneideinsatzes (5) parallel zur Achse des Halterschaftes liegt und daß alle drei Schneideinsatz-Auflageflächen (8, 9, 10) der zweiseitig offenen Ausnehmung (4) sowohl untereinander, als auch mit der offenen Seitenfläche (14) bzw. der Stirnfläche (12) Winkel kleiner 90° einschließen.

2. Schneidwerkzeug nach Anspruch 1, dadurch gekennzeichnet, daß der Klemm-Schenkel (6) eine vom inneren Ende des Längsschlitzes (2) beabstandete Gewindebohrung (26) zum Einschrauben eines sich auf den darunterliegenden Schaft (3) abstützendem Aufspreizdorns (27) aufweist.

3. Schneidwerkzeug nach Anspruch 2, dadurch gekennzeichnet, daß der Aufspreizdorn (27) eine, Überspannungen verhindernde Anschlagschulter (16) aufweist.

4. Vorrichtung zum Wechseln des Schneideinsatzes bei einem Schneidwerkzeug nach einem der Ansprüche 1 bis 3, gekennzeichnet durch einen Schneideinsatzauflagemulde (19) mit Justierhalterungen (20,21,25) für den Halterschaft sowie mit seitlichen Schneideinsatz-Auflagestufen (22) am vorderen Ende, deren beide Seitenflächen (23,24) im wesentlichen in einer Ebene der Bodenfläche (8) der Rückdruckabstützfläche (9) der Schneideinsatz-Ausnehmung (4) des aufgelegten Schneidwerkzeugs (1) liegen.

FIG. 1

FIG. 2

FIG. 3

FIG. 4

FIG. 5

FIG. 6

FIG. 7

FIG. 8

FIG. 9